# EUROPEAN PATENT APPLICATION

(11) **EP 1 701 491 A1**
(43) Date of publication of application: **13.09.2006**
(21) Application number: 06110807.2
(22) Date of filing: 07.03.2006
(51) Int. Cl.: H04L 12/56, H04L 12/24

(54) **Method and apparatus for providing dynamic traffic control within a communications network**

(30) Priority: 08.03.2005 US 74988
(71) Applicant: AT&T Corp., New York, NY 10013-2412 (US)
(72) Inventor: Iloglu, Ali Murat, Laurance Harbor, NJ 08879 (US); Nguyen, Han Q, Marlboro, NJ 07746 (US); Mulligan, John T., Brick, NJ 08723 (US); D'Souza, Kevin L., Cranbury, NJ 08512 (US)
(74) Representative: Harding, Richard Patrick

(57) **Abstract**

A method and apparatus for providing traffic management through dynamic and granular definitions of route groups. Within a communications network (104), a traffic routing control unit (e.g., an intelligent route service control point (IRSCP)) (106) creates route group assignments for each route within a customers network in accordance with a customer's routing plan, determines protocol control values to be set within each edge router (108,112,116,122,126,130) of the network (104) to fulfill the group assignments, and uses border gateway protocol (BGP) to set the protocol control values in the edge routers to facilitate fulfilling the route group assignments. Using the traffic routing control unit (106) and programming the protocol control values of the edge routers (108,112,116,122,126,130), enables the network (104) to be flexibly defined and the traffic routing within the network (104) to have very granular control.

## Description

### BACKGROUND OF THE INVENTION

### Field of the Invention

The present invention generally relates to traffic management within an internet protocol (IP) based communications network and, more particularly, to the creation and management of route groups within an IP-based communications network.

### Description of the Background Art

Presently, IP-based networks are designed to provide communications connectivity for IP packets of information from one point within a network to another point within a network. A customer generally establishes a policy with regard to the routing of their data through an IP based network. The policies established for the sites within the network having the same routing policies define the route groups. A communications network service provider defines the routing of the communications traffic between the two points using the policies established by the customers. As such, traffic routing is controlled by the service provider; however, the route group policies are defined by the customers. In some situations, the network service customers desire to have particular traffic regions defined for their communications traffic (i.e., have certain traffic confined to a particular geographic region). Presently, such specific routing protocols for network traffic require special, individualized programming of the edge routers within the network. Once grouped, the programmed edge routers and the traffic patterns they control are generally static. Such static traffic patterns do not provide the flexibility or the granularity that customers' desire in controlling their network traffic. Also, programming each edge router consistently per customer is operationally very complex.

Therefore, there is a need in the art for a dynamic and granular traffic management technique that will improve the efficiency in defining and operating route groups within an IP communications network.

### SUMMARY OF THE INVENTION

The present invention is a method and apparatus for providing traffic management through dynamic and granular definitions of route groups. Within a communications network, a traffic routing control unit (e.g., an intelligent route service control point (IRSCP)) establishes the route group assignments to fulfill a customer's routing policy, determines protocol control values to be set within each edge router of the network to fulfill the group assignments, and uses border gateway protocol (BGP) to set the protocol control values in the edge routers to facilitate fulfilling the route group assignments. Using the traffic routing control unit and programming the protocol control values of the edge routers, enables the network to be flexibly defined and the traffic routing within the network to have very granular control.

### BRIEF DESCRIPTION OF THE DRAWINGS

So that the manner in which the above recited features of the present invention can be understood in detail, a more particular description of the invention, briefly summarized above, may be had by reference to embodiments, some of which are illustrated in the appended drawings. It is to be noted, however, that the appended drawings illustrate only typical embodiments of this invention and are therefore not to be considered limiting of its scope, for the invention may admit to other equally effective embodiments.

Figure 1 depicts a block diagram of a communications network arranged in accordance with the present invention; and

Figure 2 depicts a flow diagram of a method of establishing route groups in accordance with the present invention.

### DETAILED DESCRIPTION

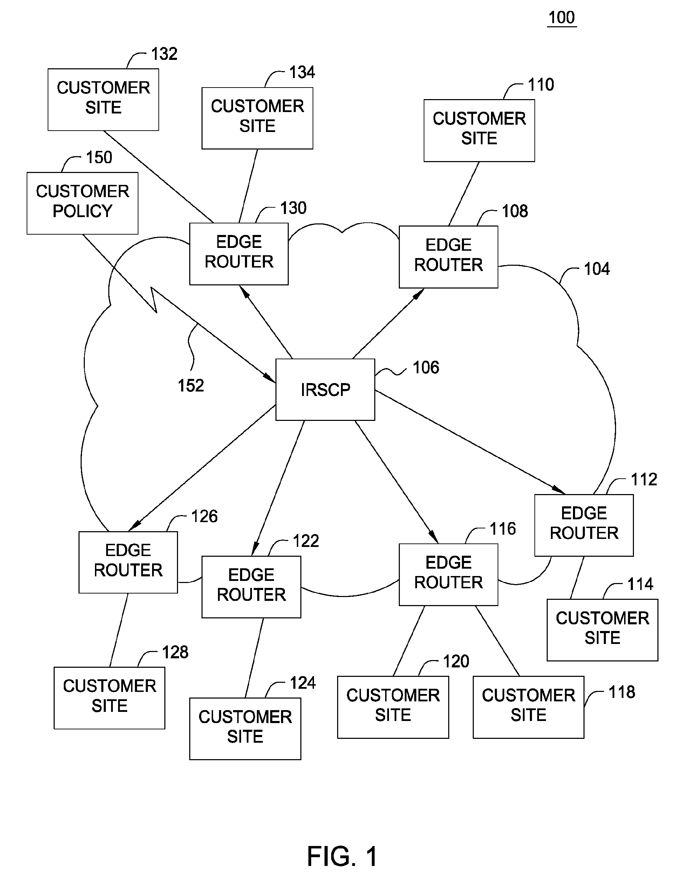

Figure 1 depicts an IP-based communications network 100 (for example, an RFC 2547 based IP VPN) comprising a network infrastructure 104, an intelligent route service control point (IRSCP) 106 (i.e., a traffic routing control unit), at least one edge router (edge routers 108, 112, 116, 122, 126 and 130 are shown), and a variety of network service users identified as customer sites 110, 114, 118, 120, 124, 128, 132, and 134. A customer of a service provider that operates the network 100 defines a routing policy 150 that establishes routing preferences, routing denial parameters and route filtering. This policy is communicated via path 152, e.g. via customer peering protocol signals e.g., BGP standard community values) or e-portal to the provider's IRSCP 106. The IRSCP 106 uses the policy to establish the groupings of the edge routers 108, 112, 116, 122, 126, 130, by programming the protocol control values of the edge routers within the network 104.

The IRSCP 106 dynamically adjusts traffic flow through the network 104 as described in commonly assigned U.S. patent application number 11/019,845, filed 12/22/04, Attorney Docket No. 2004-0085, which is incorporated by reference herein in its entirety. The IRSCP 106 uses a border gateway protocol (BGP) and an interior border gateway protocol (IBGP) to control the routing protocols of the edge routers 108, 112, 116, 122, 126 and 130 within the network 104. The route groups can be defined (but not limited) by establishing at least one of route preferences, route denial parameters, and route filtering.

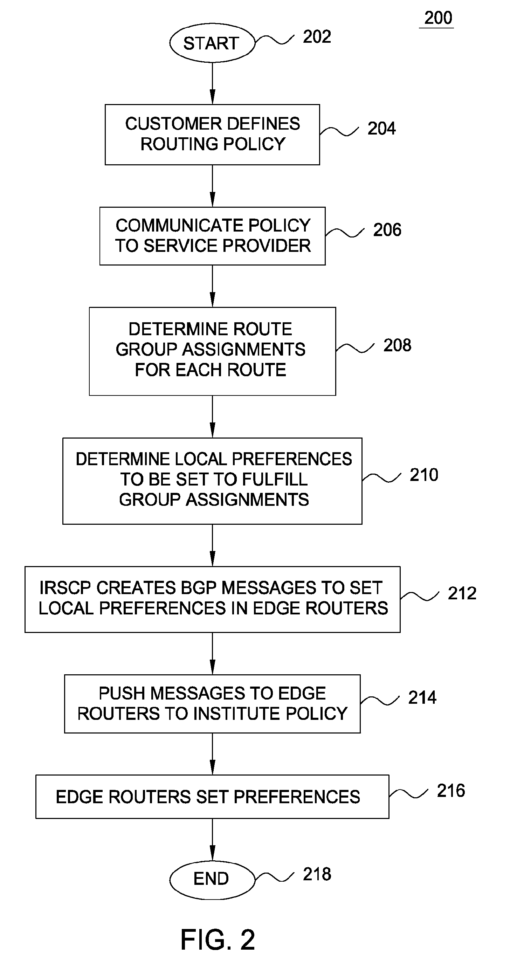

Figure 2 depicts a flow diagram of a method 200 for establishing route groups within the network infrastructure 104 of Figure 1. The method 200 starts at step 202 and proceeds to step 204 wherein the customer defines a routing policy that establishes at least one of routing preferences and routing denial parameters . Routing preferences define a particular route or routes for a particular customer site server to another site. The preferences generally establish a hierarchical routing structure that provides various routes ordered from most desirable to least desirable. Selection of a particular route may be based on network loading, router or server failures, connection failures, maintenance schedules and the like. Route filtering involves classifying routes into separate groups, setting priorities associated with those route groups and selectively advertising those route groups to customer sites, thus placing artificial controls on which customer sites can communicate with other customer sites.

Once the policy is created, at step 206, the customer communicates the policy to the service provider. The policy is generally submitted to the IRSCP using customer peering protocol control values (e.g., BGP Community values)or an e-portal.

At step 206, the method 200 determines route group assignments for each route between points (nodes) of the network as dictated by the policy. The method identifies each possible route from customer site to customer site to fulfill the routing requirements of the customer. To facilitate this traffic routing protocol, there may be a number of routers that can be used to handle the traffic from, for example, customer site 110 to customer site 120. As such, a route group is defined, by the routing preferences of the policy. At step 208, the IRSCP 106 is used to define all the routes that can handle the traffic to fulfill the requirements of the customer. The route definition step is performed for each and every one of the customer site to customer site traffic pattern requirements.

At step 210, the IRSCP 106 determines the protocol control values to be set within each router to fulfill the group assignments. In one embodiment of the invention, there are seven BGP protocol control values that can be set in any router. The protocol control values are referred to in BGP as the community values (i.e., local preferences). These community values include five route preferences, one route denial and another value that is used for denying the route for all route groups except for a specific route group. A customer can use these seven defined community values to communicate their policies to the provider. In one embodiment, any given edge router may be included in up to thirty two different route groups within various network configurations. As such an edge router may be contained within a number of different route groups defining different regions of the network. Once the community values are determined for each edge router to fulfill the policy requirements, the method 200 proceeds to step 212. At step 212, the IRSCP creates BGP messages to communicate the customer policy into the edge routers by using "control knobs" such as local preferences. IRSCP can use other protocols besides BGP or use other "knobs" besides local preference to communicate the routing policy to the edge routers..

At step 214, the IRSCP pushes the BGP messages through the edge routers to institute the policy. At step 216, the edge routers set their local preferences in accordance with the BGP messages. As such, the customer's routing policy is specifically implemented with granularity at the individual edge router. The method ends at step 218.

If a customer requires a change in their policy, the customer communicates the change to the IRSCP and method 200 is performed to update the local preferences to fulfill the new requirements. As such, the invention can be used to dynamically adjust the network routing to fulfill the changing needs of a customer.

In this manner the centralized IRSCP 106 can define the traffic routing protocols for all of the edge routers 108, 112, 116, 122, 126, and 130 within a network 104. The protocols can be used to define a plurality of regions for traffic propagation. The plurality of regions may be defined to enable a single customer to have multiple areas with traffic that does not cross between the two regions or it may enable multiple customers of the same network provider to require their traffic to be separately routed through the network. In other instances, the regions may be different regions of the world that cannot have their traffic pass from one region to another. As such, the invention enable those regions to be segregated. Such segregation may be desired to fulfill government regulations as well as customer requirements.

Traffic may also be passed between regions in a specific manner where not all the traffic from one region is passed through to another region, but the traffic may be filtered to allow certain traffic to pass. Such a filtering function may be accomplished by the IRSCP 106 programming an edge router to forward certain traffic to an edge router within a different region. For example, edge router 116 may be programmed to send certain traffic to edge router 122, where routers 116 and 122 are in different regions. Such filtering may be required to meet certain customer requirements.

Consequently, the IRSCP 106 can be used to provide route grouping and traffic filtering on a dynamic and granular basis. Network customers receive flexibility in defining the route groups and adjusting the route groups to fulfill their specific traffic routing requirements.

While the foregoing is directed to embodiments of the present invention, other and further embodiments of the invention may be devised without departing from the basic scope thereof, and the scope thereof is determined by the claims that follow.

## Claims

1. A method of managing communications traffic within a communications network comprising:
defining a routing policy;
determining, in response to the routing policy, at least one route group assignment for at least one traffic route between points in a communications network;
determine a protocol control value to be established for at least one edge router to fulfill the at least one route group assignment; and
programming the at least one edge router with the protocol control value to establish the at least one assigned route group.

2. The method of claim 1 wherein the at least one route group defines independent regions for communications traffic.

3. The method of claim 1 or 2 wherein the at least one edge router may be programmed within each region to provide filtering of traffic between regions.

4. The method of any preceding claim wherein the protocol control value is a community value.

5. The method of any preceding claim wherein the programming step is performed by a traffic routing control unit which is preferably an intelligent route service control point (IRSCP).

6. The method of any preceding claim wherein the routing policy defines at least one of routing preferences, routing denial parameters, and route filtering.

7. Apparatus for managing traffic within a communications network comprising:
at least one programmable edge router; and
a traffic routing control unit, coupled to the at least one programmable edge router, for programming a protocol control value within the programmable at least one edge router to route traffic through the at least one programmable edge router to define at least one route group in accordance with a routing policy.

8. Apparatus according to claim 7 wherein the traffic routing control unit is an intelligent route service control point (IRSCP).

9. Apparatus according to claim 7 or 8 wherein the at least one route group defines independent regions for communications traffic.

10. Apparatus according to any of the claims 7 to 9 wherein the at least one edge router may be programmed within each region to provide filtering of traffic between regions.

11. Apparatus according to any of the claims 7 to 10 wherein the protocol control value is a community value.

12. Apparatus according to any of the claims 7 to 11 wherein the routing policy defines at least one of routing preferences, routing denial parameters and route filtering.

13. A method of defining route groups comprising:
defining a route policy;
communicating the route policy to a network control unit;
determining the route group assignments in accordance with the routing policy;
determining programming parameters to fulfill the group assignments;
creating messages to communicate the programming parameters to a plurality of edge routers;
communicating the messages to the plurality of edge routers;
programming the plurality of edge routers using the programming parameters.

14. The method of claim 13 wherein the routing policy defines at least one of routing preferences, routing denial parameters and route filtering.
